# EUROPÄISCHE PATENTSCHRIFT

(11) **EP 1 748 917 B1**
(45) Veröffentlichungstag und Bekanntmachung des Hinweises auf die Patenterteilung: **11.02.2009**
(21) Anmeldenummer: 05745379.7
(22) Anmeldetag: 02.05.2005
(51) Int. Cl.: B61C 13/04, B60L 11/18

(54) **TRANSPORTSYSTEM MIT LAUFWAGEN, WELCHE MITTELS BRENNSTOFFZELLEN ANGETRIEBEN SIND**
TRANSPORT SYSTEM COMPRISING TRAVELING WAGONS DRIVEN BY MEANS OF FUEL CELLS
SYSTEME DE TRANSPORT COMPRENANT DES CHARIOTS QUI SONT ENTRAINES AU MOYEN DE PILES A COMBUSTIBLE

(30) Priorität: 27.05.2004 DE 102004026562
(43) Veröffentlichungstag der Anmeldung: 07.02.2007
(73) Patentinhaber: Montech AG, 4552 Derendingen (CH)
(72) Erfinder: WULLSCHLEGER, Christian, 4536 Attiswil (CH)
(74) Vertreter: Weiss, Peter
(86) Internationale Anmeldenummer: PCT/EP2005/004748
(87) Internationale Veröffentlichungsnummer: WO 2005/118365

(56) Entgegenhaltungen:
- EP-A- 1 384 641
- DE-A1- 10 216 353
- DE-A1- 19 506 670
- DE-A1- 19 629 084
- PATENT ABSTRACTS OF JAPAN Bd. 2003, Nr. 12, 5. Dezember 2003 (2003-12-05) & JP 2003 276983 A (JFE STEEL KK), 2. Oktober 2003 (2003-10-02)

## Beschreibung

Die Erfindung betrifft einen Laufwagen zum Transport von zu bearbeitenden Werkstücken auf, in oder an einem Werkstückträger zwischen Bearbeitungsstationen auf, in oder an Schienen, mit Bewegungselementen, beispielsweise Laufrädern,

### Stand der Technik

Aus der JP 2003276983 A ist ein Deckenkran bekannt, der mit einer Brennstoffzelle als Antriebsquelle betrieben wird. Die vorliegende Erfindung bezieht sich jedoch auf Transportsysteme, welche aus einem Schienenstrang bestehen, auf denen mehrere Laufwagen angeordnet sind, welche Werkstücke zu mehreren hintereinander angeordneten Bearbeitungsstation transportieren. Der Schienenstrang bildet ein geschlossenes System, welches die Laufwagen mittels Weichen auf Nebenstränge führen kann und von diesen zurück In den Hauptstrang. Ebenfalls sind Hubeinrichtungen vorgesehen, welche die Laufwagen auf in der Höhe unerschiedlich angeordnete Schienenstränge führen können, z.B. um innerbetriebliche Fahrwege zu überbrücken. Ein derartiges System ist beispielsweise in der DE 43 05 347 A beschrieben, eine Beschreibung eines Laufwagens gemass den Merkmalen des Oberbegriffes von Anspruch 1 findet sich in der DE 195 06 670 A.

Die bis heute bekannten Laufwagen werden entweder mit an den Schienensträngen befestigten Stromleitern und Schleifkontakten z.T. auch Rollkonkakten mit elektrischer Energie versorgt, oder sie enthalten Stromspeicher (Batterien und/oder Superkondensatoren), welche von Zeit zu Zeit an Ladestationen wieder aufgeladen werden müssen.

Werden Werkstücke transportiert, welche eine sehr saubere Umgebung verlangen (Reinräume), so kommen Schleif- oder Rollkontakte zum Zwecke der Energieübertragung nicht In Frage, well sie die Luft verunreinigen. Die Speisung der Laufwagenantrlebe mittels in jedem Laufwagen mit geführter Batterien hat den Nachteil, des sog. Memory-Effekts, der durch regelmässige Teilentladung auftritt und dazu führt, dass nur noch ein Teil der in den Batterien gespeicherten Energie tatsächlich genutzt werden kann. Die In Superkondensatoren speicherbare Energie ist gemessen an deren Volumen und deren Gewicht relativ gering, was dazu führt, dass der Weg eines Laufwagens bis zur nächsten Aufladestation relativ kurz sein muss, damit die Restenergie zur Überwindung dieses Weges noch ausreicht. Das hat zur Folge, dass in einem gesamten Transportsystem viele Ladestationen vorgesehen werden müssen mit den entsprechenden Kostenkonsequenzen.

### Aufgabe

Aufgabe der vorliegenden Erfindung ist es, den Antrieb an Laufwagen zu verbessern.

### Lösung der Aufgabe

Zur Lösung der Aufgabe führt, dass den Bewegungselementen als Antrieb eine Brennstoffzelle zugeordnet ist.

Die den oben beschriebenen Systemen anhaftenden Nachteile können dadurch beseitigt werden, dass den Laufwagen Energiequellen zur Verfügung gestellt werden, welche weder die Luft verunreinigen, noch den unerwünschten Effekt der Teilenergienutzung aufweisen. Diese Bedingungen erfüllen Brennstoffzellen. Auf die Funktionsweise der in Frage kommenden Brennstoffzellen wird hier nicht weiter eingegangen. Von Bedeutung ist allein, dass als Energieträger sowohl Methanol, als auch Wasserstoff zur Anwendung kommen können und dass im einen Fall Wasserdampf und in geringen Mengen auch Kohlenmonoxid und Kohlendioxid als Abgas entsteht, und im anderen Fall nur Wasserdampf.

Die Laufwagen enthalten einen Gastank, der an einer Tankstation durch automatisches Andocken eines Tankstutzens mit einem der erwähnten Energieträger gefüllt wird. In einer weiteren Ausführung ist vorgesehen, dass den Laufwagen an einer Tankstation die entleerte Kartouche automatisch entnommen und eine mit Methanol oder Wasserstoff gefüllte Kartouche eingesetzt wird. Der Zeitpunkt des Auftankens, oder des Kartouchen-Wechsels des einzelnen Laufwagens ist dann erreicht, wenn die in der elektronischen Tanküberwachung vorgegebene Energiemenge von der laufend festgestellten Energiemengenmessung erreicht wird. Ein weiterer Vorteil des neuen Systems ist darin zu sehen, dass die im Laufwagentank oder in der Laufwagenkartouche gespeicherte Energiemenge jene der in Batterien oder Superkondensatoren speicherbaren Energie bei gleichem Volumen um ein Mehrfaches übersteigt. Dadurch wird die Funktionsautonomie wesentlich gesteigert und als Folge davon sind wesentlich weniger Auflade bzw. Tankstationen nötig.

Die Ausgestaltung der Schienenstränge und der übrigen Systemkomponenten, wie Kurven, Weichen, Hubeinrichtungen, Positioniervorrichtungen etc., welche das gesamte Transportsystem bilden, bleiben gegenüber der, im "Stand der Technik" beschriebenen unverändert.

## Patentansprüche

1. Laufwagen zum Transport von zu bearbeitenden Werkstücken auf, in oder an einem Werkstückträger zwischen Bearbeitungsstationen auf, In oder an Schienen, mit Bewegungselementen, beispielsweise Laufräder,
**dadurch gekennzeichnet,**
**dass** den Bewegungselementen als Antrieb eine Brennstoffzelle zugeordnet ist

2. Laufwagen nach Anspruch 1, **dadurch gekennzeichnet, dass** die Brennstoffzelle mit einem Tank für eine Energiequelle verbunden ist.

## Claims

1. A carriage for transporting work pieces to be machined, on, in or at a work piece carrier between machining stations, on, in or at rails, with movement elements, for example running wheels,
**characterized in that,**
a fuel cell is assigned to the movement elements as a drive.

2. The carriage according to claim 1, **characterized in that** the fuel cell is connected to a tank for an energy source.

## Revendications

1. Chariot pour le transport de pièces à usiner sur, dans ou à un porte-pièce, entre des postes de traitement sur, dans ou à des rails, avec des éléments de déplacement, par exemple des galets,
**caractérisé par le fait**
**qu'**aux éléments de déplacement est associée, comme entraînement, une pile à combustible.

2. Chariot selon la revendication 1, **caractérisé par le fait que** la pile à combustible est reliée à un réservoir d'une source d'énergie.
